# EUROPEAN PATENT SPECIFICATION

(11) **EP 3 216 768 B1**
(45) Date of publication and mention of the grant of the patent: **19.09.2018**
(21) Application number: 16159820.6
(22) Date of filing: 11.03.2016
(51) Int. Cl.: C02F 1/68, C02F 1/42, C02F 1/44

(54) **CAPSULE FOR REMINERALIZING WATER**
KAPSEL ZUR REMINERALISIERUNG VON WASSER
CAPSULE POUR LA REMINÉRALISATION DE L'EAU

(43) Date of publication of application: 13.09.2017
(73) Proprietor: RIPRUP Company S.A., St. Peter Port GY1 1WQ (GG)
(72) Inventor: SCHUCKER, Josef, 6622 Ronco/Ascona (CH)
(74) Representative: Müller-Dyck, Martina

(56) References cited:
- WO-A1-2008/102407
- DE-U1-202014 000 652
- US-A1- 2014 374 327
- US-A1- 2015 090 128

## Description

### Technical field

The invention relates to the remineralization of drinking water. In particular, the invention relates to a capsule for remineralizing water and to a beverage dispenser.

### Background of the invention

The composition and quality of drinking water obtained from surface- and/or groundwater, may vary in the world. The ingredients of water may be a result of the geological composition of the ground, through which the water is flowing, and from the substances that get into the water from the environment. These substances may, for example, include unwanted contaminants such as pesticides, insecticides, heavy metals and/or pharmaceutical residues. In particular, the contaminants may comprise:
- pesticides and insecticides as well as their degradation products,
- pharmaceutical ingredients such as antibiotics, cytostatics, hormones or X-ray contrast agents,
- corrosion inhibitors such as benzotriazole, tolyltriazine from refrigeration and hydraulic fluids which may also be used as corrosion protection additives for dishwashing detergents,
- flame retardants, which are often used in textiles and may comprise halogenated hydrocarbons such as polychlorobiphenyls, chlorinated paraffins, or organophosphorous compounds, which may gradually be washed off during the washing process,
- aryl sulfonates, which may be used as precursor substance in azo dyes, optical brighteners, and pharmaceuticals,
- endocrine disrupting substances such as bisphenol-A, tributyltin compounds, alkylphenols, some pesticides, dioxins, polychlorinated biphenyls, or organic compounds for absorbing harmful UV radiation in sunscreens,
- perfluorinated tensides, perfluorooctane sulfonate (PFOS) and perfluorooctanoic acid (PFOA) used in the galvanic industry and being an end product of the degradation of many polymers,
- polycyclic organic hydrocarbons (PAH),
- volatile halocarbons (LHKW), or
- artificial sweeteners such as acesulfame, cyclamate, saccharine, or succralose.

In addition to organic trace elements, water may comprise, for example, microplastic from cosmetic and hygiene products such as peelings, toothpaste, or detergents, as well as synthetic fibers from fleece garments, which may be released during the washing process of clothes, providing new challenges for the water treatment. These plastics may contain trace substances such as plasticizers, flame retardants, or pesticides, which may be bound from the water onto the plastic. Said substances may then be ingested by consumers via the marine fauna, which metabolizes the plastics.

The contaminants may also comprise uranium, which may get into the surface and groundwater through the fertilization of plants. Uranium presents another contamination source for tap water. Mineral fertilizers may comprise between 100 and 400 g of uranium per ton of fertilizer. In this way, about 50 t of uranium are distributed onto the fields in Germany every year. It is assumed that nowadays one fourth of the tap water is contaminated with uranium.

Many of these contaminants have already been detected in drinking water, and thus, it is a worldwide trend that consumers do not trust the quality of the drinking water anymore and therefore switch to bottled water, i.e. water filled in plastic or glass bottles. The bottled water is typically obtained from regions with non-polluted groundwater resources, and therefore, the customers believe that it is less contaminated. This water may be regionally sold but is often transported over long distances, which is also an ecological problem. Thus, the transport of the bottles and the emptying of the ground water resources in certain regions may more and more be rejected by the population.
In order to reduce the transport of bottled water from distant regions, there is the possibility to use reverse osmosis for removing all contaminants up to 95% or more. The downside of reverse osmosis is that also desired substances in the drinking water may be removed such as the physiologically valuable minerals calcium and magnesium. Furthermore, the water resulting from the reverse osmosis (also denoted as permeate) may be tasteless and physiologically not valuable.
DE 20 2007 010 790 U1 describes a single-use filter cartouche for water preparation.

US 2014/0374327 A1 discloses capsules containing a salt for mineralizing water. The capsules may comprise a mixing bar or propeller type component or have a spiral wall pattern inside to promote mixing.

However, there is still a need in the art for water remineralization and conditioning.

### Disclosure of the invention

There may be a need to improve remineralization of drinking water. This is addressed by the subject-matter of the independent claims. Further examples and embodiments are set out in the dependent claims, the following description, and the figures.

A first aspect of the invention relates to a capsule for remineralizing water. The capsule comprises a capsule body which defines an inlet side and an outlet side. Furthermore, the capsule comprises a first cavity which is located within the capsule body and comprises a salt composition. Moreover, the capsule comprises a turbulence layer. The turbulence layer is configured for creating turbulences in water flowing through the capsule body from the inlet side to the outlet side. Furthermore, the turbulence layer is arranged between the first cavity and the outlet side and has a thickness that is greater than 15% of a distance between the inlet side and the outlet side. The turbulence layer comprises a fibrous material, which is a nonwoven material.

In other words, a capsule is provided which contains a salt composition that can be dissolved into the water flowing through the capsule. Furthermore, the capsule comprises a layer which causes turbulences of the water flowing through the capsule such that the dilution of the salt composition in the water and/or the mixing of the salt composition with the water is improved. In order to provide such an improved dilution and/or mixing, the turbulence layer comprises a fibrous, nonwoven material having a thickness that is greater than 15% of the height of the capsule. In the context of the application, water flowing through the capsule may be referred to as remineralized water.
Thus, the present invention may provide a solution for providing drinking water with a constant quality regarding its substituents, in particular salts and minerals. This may particularly be the case if the capsule is combined with a reverse osmosis unit as described in the context of the application. The invention may further be used for improving the taste of soft or hard water.

In the context of the application, the term "capsule" may refer to a small container which may for example enclose a volume between 5 ml and 50 ml. In other words, the capsule may also be referred to as a single use salt composition container. The capsule described herein may have a similar structure as coffee capsules.

The capsule body may refer to an outer shell of the capsule which may have a hollow interior. Furthermore, the capsule body may impermeably seal the inside of the capsule body from the outside of the capsule body. For example, the capsule body may be made out of plastic, bioplastic, and/or aluminum. However, the capsule body may also be structured such that the inside of the capsule body is not impermeably sealed from the outside of the capsule body. For example, the capsule body may be made of oriented or non-oriented synthetic fibers, and/or natural material such as cellulose.

The inlet side and the outlet side may refer to different sides of the capsule body. For example, the capsule body may substantially have the shape of a cylinder, a truncated cone, or a truncated pyramid and the inlet and outlet sides may be defined by the top and the bottom of the cylinder, truncated cone, or truncated pyramid, respectively. By "substantially" it is meant that there may be some deviations from the pure cylindrical or conical shape such as additional rims etc. In other words, the inlet side and the outlet side may be defined by opposite sides of the capsule body. Thus, when water is flowing through the capsule body, it is flowing into the capsule body through the inlet side and out of the capsule body through the outlet side.

In the inside of the capsule body, the capsule may have a layered structure comprising at least two layers. The layers may have a planar extension and may be arranged vertically to the overall flowing direction of water through the capsule, respectively. A first layer may comprise the first cavity with a salt composition and a second layer may comprise the turbulence layer. The different layers may further be separated by boundary layers such as filters, membranes, etc.

The first cavity may refer to a volume within the capsule body. The first cavity may be located between the inlet side and the outlet side such that water is flowing through the first cavity when it is flowing from the inlet side to the outlet side. In this way, the salt composition may be dissolved into the water. Moreover, the first cavity may be delimited by a sidewall of the capsule body. Thus, the first cavity may at least partly be delimited by the capsule body. Consequently, there may be no need for a further structure for delimiting the first cavity (e.g. a bag). In other words, a part of the sidewall of the capsule body may be a boundary of the first cavity. However, it is also possible that the first cavity is defined by a further boundary material, for example by a plastic bag that is not necessarily connected with the sidewall of the capsule body.
The turbulence layer may refer to a layer that is located between the first cavity and the outlet side such that water, which is flowing through the inlet side and the first cavity also flows through the turbulence layer. The turbulence layer is configured for creating turbulences in water that is flowing through the turbulence layer. These turbulences may improve the dissolution of the salt composition in the water and/or the mixing of the salt composition with the water. The turbulence layer may also be referred to as turbulence zone.
In other words, the first cavity and the turbulence layer may be arranged in such a way in the capsule body that water first flows through the first cavity and then through the turbulence layer.

According to the present invention, the first cavity comprises a salt composition. The salt composition may comprise mineral salts. The mineral salts may be preferably selected from the group consisting of alkali or alkaline earth salts, limestone, lime, dolomite, clay minerals, natural zeolites, and mixtures thereof.

The type of salt composition and its concentration, which may be added to the water flowing through the capsule, may be responsible for the taste of the water. Depending on the ingredients of the water, the taste of the water and herewith the taste of beverages produced on the basis of water such as tea or coffee may strongly vary. A water hardness of 6°dH may for example lead to a coffee with a taste that is experienced to be good by many consumers. On the other hand, if the water is less hard, the coffee may have a taste that is experienced to be pale. If the water is very hard, the acids in the coffee may largely be neutralized and coffee flavor may be lost. The same also accounts to the taste of drinking water as very soft water may have a pale taste and very hard water may have a floury taste.

By providing the capsule described herein, globally acting firms offering beverages such as coffee and tea specialties, may offer these beverages with the same quality and the same taste worldwide, for example, by combining reverse osmosis and the inventive capsule.

The capsule may in other words comprise a container with a volume between 5 and 50 ml and may be constructed as a deep-drawn part or an injection molded part. The shape of the capsule, i.e. the cross-section of the capsule, may be circular, oval, quadrangular or polygonal. Thus, the capsule may substantially be shaped as a cylinder, a truncated cone or a truncated pyramid. Circular or oval profiles of the capsule may be advantageous as the inside of the capsule or capsule body may comprise less or no spaces where the water does not flow through. In other words, the capsule may have a shape which causes a uniform flow of water through the capsule body. In this way, a constant dissolution of the salt composition into the water is provided. The capsule body may comprise aluminum, plastic such as polypropylene (PP), polyethylene (PE), or plastic fleece with oriented or non-oriented fibers, natural materials such as abaca or other cellulose based materials, or degradable bioplastics or mixtures thereof. Furthermore, the capsule may comprise an outer body that is configured for receiving the capsule body. This outer body may be made of glass, plastic, ceramics, stainless steel, titanium, or mixtures thereof.

If the capsule is a deep-drawn part, the bottom of the capsule may be perforated or may comprise a synthetic fleece with oriented or non-oriented fibers. If the capsule is an injection-molded part, the bottom of the capsule may comprise defined openings provided via the used injection mould. For example, the defined openings may have a pore size from 20 µm to 200 µm. If the bottom of the capsule is produced by injection molding, it may comprise a supporting structure on which a paper filter or a fleece with oriented or non-oriented fibers is applied in a second production step of the capsule. In this respect, the bottom of the capsule or capsule body may refer to the outlet side of the capsule body.

The top surface of the capsule, which may be referred to as the inlet side of the capsule body, may be provided by a non-perforated foil, which may only be perforated by a beverage dispenser when the capsule is inserted into the beverage dispenser. The foil may be glued or ultrasonically welded to the inlet side of the capsule body. In order to control or direct the water flow through the capsule body, the openings in the inlet and/or the outlet sides may be specifically designed, e.g. unevenly distributed.

Furthermore, between the top surface, i.e. the inlet side, and the bottom surface, i.e. the outlet side, the capsule body may comprise at least two different layers. A first layer which may be nearer to the inlet side may comprise a salt and mineral filling (i.e. a salt composition) and the second layer, which may be nearer to the outlet side, may be a turbulence zone (i.e. the turbulence layer). Between the top surface and the first layer, the capsule may further comprise a paper filter or a fleece with oriented or non-oriented fibers for distributing the inflowing water and/or for preventing that particles exit the capsule (i.e. a filter layer). Thus, this filter layer may also be referred to as water distribution layer. The filter layer may comprise a fibrous material, for example, a fleece. The fleece may contain fibers made of synthetic polymers such as polypropylene (PP), polyester (PES), or polyethylene (PE), fibers from natural polymers such as viscose, natural fibers such as cellulose based fibers, or composites of fibers of natural polymers and synthetic polymers. The thickness of the filter layer between the inlet side and the salt composition may be maximally 2 mm. According to one embodiment the fibrous material of the filter layer has a pore size from 1 µm to 200 µm, preferably from 10 to 150 µm, and most preferably from 50 to 100 µm. The pore size is measured according to ASTM D6767 or ASTM D4751.

Additionally or alternatively, the fibrous material of the filter layer may have a specific weight between 10 g/m² and 100 g/m², preferably between 20 and 80 g/m², and most preferably between 30 and 50 g/m².

The salt and mineral layer, i.e. the first cavity, may have a volume that varies between 0.5 ml and 40 ml. Apart from salts and minerals, this layer may also comprise an ion exchanger (i.e. an ion exchange element) and/or at least one solid acid and/or at least one acid salt (i.e. an acid composition), which may be mixed with the salts and minerals of this layer.

If the first cavity only comprises the salt and/or minerals without the ion exchanger and/or the acid composition, the volume of the first cavity may be between 2.5 % and 50% of the total volume of the capsule, preferably between 2.5 % and 25 % of the total volume of the capsule, and most preferably between 2.5 % and 15 % of the total volume of the capsule.

The ion exchanger, the solid acid or the acid salts may also be provided in a further layer, which may be arranged between the inlet side and the first salt and mineral layer (i.e. the first cavity), in particular between the water distribution layer and the salt and mineral layer.

The turbulence layer or turbulence zone may be provided for improving the dissolution of the salts and minerals into the water. This turbulence layer may comprise a fleece made from oriented or non-oriented synthetic fibers such as polypropylene (PP), polyester (PES), or polyethylene (PE), natural fibers such as cellulose based fibers and/or composites from natural and synthetic fibers. The specific weight of the turbulence material may be between 40 and 400 g/m².

In order to ensure hygienic water, a bacterial barrier (i.e. a membrane filter) may additionally be provided. This bacterial barrier may have a pore size of less than 0.2 µm and/or may be provided as a flat sheet membrane filter, for example, as an ultrafiltration flat sheet membrane filter.

Furthermore, the capsule may also comprise a further layer of a beverage base such as coffee, tea or other beverage substances.

According to an exemplary embodiment, the capsule body may have the shape of a rotationally symmetric body, preferably a cylinder, a truncated cone, or a truncated pyramid. In this case, the inlet and outlet sides of the capsule body may be defined by top and bottom surfaces of the rotationally symmetric body and the capsule body may comprise a sidewall that is defined by a shell surface of the rotationally symmetric body.

In the context of the application, a rotationally symmetric body may also refer to a body that is only symmetric under discrete rotations smaller than 360°. A pyramid may for example be rotationally symmetric under discrete rotations of 90° and multiples thereof and is therefore understood to be a rotationally symmetric body.

According to a further exemplary embodiment of the invention, the capsule may be a single used capsule. The capsule may further comprise an outer body that is configured for multiple uses and for receiving the capsule body. In other words, the capsule body may be inserted into the outer body.

If the capsule is configured for multiple uses, the solubility of readily soluble salts may be reduced as otherwise, the readily soluble salts may already completely be dissolved after the first use of the capsule. This may be achieved by pressing the readily soluble salts into a tablet or a granulate, for example, by means of an eccentric press or roller press. In this way, the solubility of readily soluble salts such as sodium chloride or magnesium sulfate heptahydrate can be reduced by reducing the surface of the salt that comes into contact with water. Alternatively, a mixture of readily soluble and partly soluble salts or minerals may be provided in tablet form or granulate form.
According to a further exemplary embodiment, the capsule may be a reusable capsule, i.e. a capsule for multiple uses. In this case, the capsule may be made of a material that is suited for multiple uses such as stainless steel, glass, ceramics and/or titanium. In this way, a more ecological capsule may be provided.

According to the invention, the turbulence layer comprises a fibrous material, which is a nonwoven material. Suitable fibrous materials are known to the skilled person and may be selected from natural fibrous material or synthetic fibrous material or inorganic fibrous material. Examples for suitable natural fibrous material are cellulosic fibers, cotton, viscose, ramie, flax, hemp, sisal, linen, jute, or straw. Examples for suitable synthetic fibrous material are fibers made from nylon, polyamide, polyester, polyethylene, polypropylene, polybutylene, polyacrylnitrile, polycarbonate, or polyacrylate. Examples for suitable inorganic fibrous material are glass fibers or ceramic fibers. According to one embodiment, the fibrous material is selected from cellulose, polypropylene, polyethylene, polyester, and mixtures thereof, most preferably polyethylene.

According to the invention the fibrous material is a nonwoven material. In the meaning of the present invention, the term "nonwoven material" refers to a flat, flexible, porous sheet structure that is produced by interlocking layers or networks of fibres, filaments, or film-like filamentary structures. The nonwoven material can be made from any one of the aforementioned fibrous materials. The nonwoven material can also be a composite material of natural and synthetic fibres. According to one embodiment the nonwoven material has a felt structure. The surface of the felt structure can be treated, for example, heat-treated, in order to fix, for example, loose fibers. In this way, the turbulence layer is configured for effectively creating turbulences in the water flowing through the capsule from the inlet side to the outlet side.

According to a further exemplary embodiment of the invention, the fibrous material has a mean pore size from 100 µm to 400 µm, preferably from 150 µm to 350 µm, more preferably from 170 µm to 320 µm, and most preferably from 200 µm to 300 µm. The pore size is measured according to ASTM D767 or ASTM D4751.

According to one embodiment the fibrous material has a specific weight between 40 g/m² and 400 g/m². When the fibrous material is made of polyester or comprises polyester, the specific weight preferably is between 200 g/m² and 300 g/m².

These parameters may ensure that the turbulence layer causes such turbulences in the water to provide a sufficient dissolution of the salt composition into the water.

According to a further exemplary embodiment of the invention, the turbulence layer has a thickness that is between 20% and 90% of the distance between the inlet and the outlet side, preferably between 30% and 80%, and most preferably between 40% and 60%.

A greater thickness of the turbulence layer may increase the turbulences of the water and may therefore improve the dissolution of the salt composition. On the other hand, the turbulence layer may have such a thickness that there is still enough space for the salt composition in the capsule body. Thus, there may be a trade-off between the ability of creating turbulences in the water and the amount of salt composition that can be stored in the capsule.

In the context of the present invention, the distance between the inlet side and the outlet side may also be referred to as the height of the capsule body. In this way, it may be ensured that the turbulence layer has an optimal thickness for creating the turbulences in the water flowing through the capsule body.

According to another exemplary embodiment of the invention, the first cavity has a volume between 0.5 ml and 40 ml. If the first cavity only comprises the salt and/or minerals and/or the acid composition without the ion exchanger, the volume of the first cavity may be between 2.5 % and 50% of the total volume of the capsule, preferably between 2.5 % and 25 % of the total volume of the capsule, and most preferably between 2.5 % and 15 % of the total volume of the capsule.

This may particularly be the case when the first cavity does not include the ion exchanger and/or the acid composition described in the context of the present application. If the first cavity additionally comprises the ion exchanger and/or the acid composition, the volume of the first cavity may be between 15 % and 85 % of the total volume of the capsule, preferably between 25 % and 85% of the total volume of the capsule, and most preferably between 50 % and 85 % of the total volume of the capsule.

In this way, it is ensured that the first cavity has a volume that is large enough for storing enough salt composition for creating a portion, e.g. one liter, of remineralized water. According to one embodiment, the first cavity has a volume that is large enough for storing enough salt composition for creating 25 ml, 125 ml, 250 ml, 300 ml, 400 ml, 500 ml, 750 ml, or 1000 ml of remineralized water, preferably 1000 ml.

According to a further exemplary embodiment of the invention, the capsule further comprises a filter layer that is arranged between the first cavity and the inlet side.

In the context of the present application, the filter layer may also be referred to as the water distribution layer. This filter layer may prevent that solid particles such as salts and minerals fall out of the capsule. Furthermore, the filter layer may cause that the water inflowing through the inlet side is distributed over a larger surface of the salt composition such that a constant dissolution of the salt composition in the water is provided.

According to a further exemplary embodiment of the invention, the filter layer comprises a fibrous material with oriented or non-oriented fibers, wherein the fibrous material of the filter layer has a pore size from 1 µm to 200 µm, preferably from 10 µm to 150 µm, and most preferably from 50 µm to 100 µm.

In this way, it is ensured that the filter layer at the same time prevents that solid particles are falling out of the capsule and ensures that the water is evenly distributed over the first cavity.

According to a further exemplary embodiment of the invention, the fibrous material of the filter layer has a specific weight between 10 g/m² and 100 g/m², preferably between 20 g/m² and 80 g/m², and most preferably between 30 g/m² and 50 g/m².

It has been discovered that such parameters provide an optimal functioning of the filter layer.

According to a further exemplary embodiment of the invention, the capsule further comprises an ion exchange element within the first cavity or between the first cavity and the inlet side, preferably the ion exchange element comprises a weak acid and/or strong acid cation exchange material. Additionally or alternatively, the capsule further comprises an acid composition comprising at least one acid and/or at least one acid salt within the first cavity and/or between the first cavity and the inlet side.

Preferably, the capsule may comprise an acid composition and/or at least one acid salt for improving the dissolution of the salt composition (e.g. salts and minerals) in the water. This may be especially preferred in case permeate water obtained from reverse osmosis is used, which comprises only a minor concentration of cations.

If the ion exchange element or the acid composition is located within the first cavity, the ion exchange element or the acid composition may be mixed with the salt composition.

The ion exchange element may also be referred to as the ion exchanger. By providing such an ion exchange element, or an acid composition, the dissolution of the salt composition in the water, which is flowing through the capsule body, may be improved.

In other words, the provision of the ion exchange element or ion exchanger may solve the problem resulting from the poor solubility of certain minerals and salts in water. The ion exchanger may be embodied as a weak or strong acid cation exchanger, which preferably may be provided by 100% in the hydrogenated form, i.e. the H⁺ form, or may be loaded with sodium, potassium or magnesium cations up to 40% of the total capacity of the ion exchanger. This ion exchanger may be arranged before the salt composition (i.e. the first cavity) or may be mixed with the salt composition in the first cavity. With the release of H⁺ ions in exchange with cations, which are in the permeate or the soft water, an acidic environment may be created in the water, leading to a better dissolution of the salt composition.

Limestone for example may form soluble calcium bicarbonate when it is in contact with carbon dioxide. The chemical process may be as follows: When water containing sodium, calcium or magnesium bicarbonate flows through the weak acid cationic exchanger, the ion exchanger may exchange sodium, calcium and magnesium ions with H⁺ ions and carbonic acid may be created. The so created carbonic acid may then dissolve the limestone, gypsum or dolomite. If a strong acid cationic exchanger is used, not only the carbonate hardness (alkalinity) may be reduced (i.e. by exchanging calcium and magnesium ions which are bound to bicarbonate) but also calcium and magnesium which are bound to sulphates, nitrates and phosphates may be exchanged, i.e. the total hardness of the water may be reduced.

In a further exemplary embodiment, a mixture of at least two ion exchangers may be provided in the capsule. The ion exchange element may further comprise an anion exchange material in order to demineralize the water. The anion exchange material may comprise a weak basic and/or strong basic anion exchange material. For example, by combining a strong acid cation exchange material with a strong basic anion exchange material, water, which is flowing through the capsule body, may be demineralized to a high extent.

In this way, water which flows through the capsule is demineralized by the ion exchange material. Thus, there may be, for example, no need to purify or demineralize water by reverse osmosis. In other words, the water is first demineralized in the capsule by the ion exchange material and flows through the first cavity with the salt composition, which optionally may comprise an acid component (e.g. an acid salt), for improving the dissolution of the salt composition.

In case the ion exchange element comprises two or more ion exchange materials, e.g. a cation exchange and an anion exchange material, the ion exchange materials may be packed into the ion exchange element in form of alternating beds of ion exchange materials. Alternatively, the ion exchange materials may be packed in form of a mixed bed. Said ion exchange element may be located between the inlet side and the first cavity. Thus, it may not be mixed with the first cavity.

Suitable ion exchanger materials are known to the skilled person. Examples for ion exchange materials are cross-linked polystyrenes, wherein the actual ion exchanging sites are introduced after polymerization. The four main types of ion exchange resins may be distinguished by their functional groups (i.e. the ion exchanging sites). Strong acid cation exchangers typically comprise sulfonic acid groups, and can be made from materials such as sodium polystyrene sulfonate or poly AMPS (poly(2-acrylamido-2-methyl-1-propanesulfonic acid)). Strong basic anion exchangers typically contain quaternary amino groups, for example, trimethylammonium groups. An example of a strong basic anion exchanger is polyAPTAC (poly (acrylamido-N-propyltrimethylammonium chloride)). Weak acid cation exchangers typically contain carboxylic acid groups, and weak basic anion exchangers typically contain primary, secondary, and/or ternary amino groups, e.g. polyethylene amine. Usually the ion exchange material is employed in form of small beads, granules, and/or fibers.

In another exemplary embodiment of the invention, an acid composition comprising at least one acid and/or at least one acid salt may be provided in the capsule in a solid form. For example, the acid composition can comprise at least one acid selected from the group consisting of ascorbic acid, citric acid, fumaric acid, malic acid, tartaric acid, sorbic acid, and mixtures thereof. Additionally or alternatively, the acid composition can comprise at least one acid salt, preferably SO₄²⁻, Cl⁻ and/or H₂PO₄⁻. According to a preferred embodiment the acid composition comprises citric acid and/or a malic acid. The acid composition may be provided as a layer that is arranged between the inlet side and the salt composition layer (i.e. the first cavity). Alternatively or additionally, the acid composition may be mixed with the salt composition.

According to a further exemplary embodiment of the invention, the capsule further comprises a bacteria filter, i.e. a membrane filter, and preferably an ultrafiltration membrane filter, between the turbulence layer and the outlet side. Preferably, the membrane filter has a pore size below 0.2 µm. In other words, the bacteria filter may provide a bacteria barrier in the capsule. The bacteria filter may be located between the turbulence layer and the outlet side. Alternatively or additionally, the bacteria filter may be located between the inlet side and the first cavity. For example, the bacteria filter may be integrated or part of the filter layer described herein.

In this way, bacteria may also be removed from the water flowing through the capsule such that there are no bacteria in the remineralized water. Thus, additional contaminants may be removed.

According to a further exemplary embodiment, the capsule further comprises a second cavity between the turbulence layer and the outlet side, wherein the second cavity comprises a beverage base. Preferably, the beverage base is selected from the group consisting of espresso, coffee, tea, a soluble beverage powder, a liquid beverage concentrate, and mixtures thereof. Examples for soluble beverage powders are instant coffee, instant tee, instant soup, powdered milk, cocoa drink powder, lemonade powder, flavored drink mix powder, herb powder, fruit powder, spice powder, protein powder, sport drink powder, freeze-dried fruit powders, freeze-dried vegetable powders, smoothie powder, or vitamin powder. Examples for liquid beverage concentrates are coffee concentrate, tee concentrate, flavor emulsion, fruit syrup, herb syrup, spice syrup, lemonade concentrate, flavored drink concentrate, or vitamin concentrate. However, it is clear that the present invention is not limited to the foregoing beverage base materials.

In this way, the capsule may at the same time be used for remineralizing water and for creating a beverage such as espresso, coffee, tea, or another beverage such as lemonade. Thus, if the capsule is used in combination with e.g. a reverse osmosis unit or a similar unit, the quality of the beverage may be the same, independently of the quality and/or ingredients of the local water.

According to a further exemplary embodiment of the invention, the capsule body is divided into a plurality of chambers. Each chamber of the plurality of chambers is connected to the inlet side and the outlet side. Furthermore, each chamber of the plurality of chambers comprises a first cavity and a turbulence layer that is arranged between the first cavity and the outlet side. Moreover, each turbulence layer has a thickness that is greater than 15% of the distance between the inlet side and the outlet side. Additionally, each first cavity of each chamber is filled with a different salt composition of different solubility and each chamber is configured for allowing a different flow rate of water though the respective chamber.

In this way, the problem that different salt compositions may have different solubility may be addressed. Thus, it may be ensured that a greater amount of water flows through chambers with salts of a low solubility and less water flows through chambers filled with salt with a high solubility. In other words, the flow rate through the different chambers may be configured in such a way that the right mixture of salts and minerals is achieved in the water flowing through the capsule. Moreover, the first cavities of the different chambers or even the different chambers may have different volumes such that, for example, salts with a low solubility may be in chambers with a big volume and salts with a high solubility may be in a chamber with a small volume. In other words, the capsule may be structured such that the contact time of the water with the salt composition may vary from chamber to chamber. This may e.g. be achieved by structuring the capsule such that the flow rate of the water varies from chamber to chamber. The different flow rates of the water through the chambers may for example be achieved by varying inflow openings of the single chambers.

According to a further exemplary embodiment of the invention, the inlet side and/or the outlet side of the capsule is sealed with a punctuable foil.

In this way, the capsule may be impermeably sealed and the openings in the capsule may only be provided, when the capsule is inserted in the beverage dispensing device. In this way, it is guaranteed that no humidity reaches the salts, which could alter the quality of the resulting mineralized water. For example, the capsule body may be an injection molded or deep drawn part with openings on the inlet and outlet side. These openings may be sealed with a perforable foil, respectively. Said openings may further comprise a supporting structure for the foil such as struts for attaching (i.e. gluing, ultrasonically welding) the foil on top of the openings.

According to a further exemplary embodiment of the invention, the capsule body is made of a material selected from the group consisting of aluminum, plastic, bioplastic, oriented or non-oriented synthetic fibers, natural materials such as abaca or cellulose based materials, and mixtures thereof.

In the context of the present invention, the term "bioplastic" refers to a plastic derived from renewable biomass sources, such as vegetable fats and oils, corn starch, or microbiota. Bioplastic can be made from agricultural byproducts and also from used plastic bottles and other containers using microorganisms. Depending on its structure, biodegradable bioplastic may break down in either anaerobic or aerobic environments. Examples for bioplastic are starch-based plastic, cellulose-based plastic, polylactic acid, poly-3-hydroxybutyrate, polyhydroxyalkanoate, polyamide 11, or bio-derived polyethylene.

According to a further exemplary embodiment of the invention, the capsule further comprises an outer body that is configured for receiving the capsule body. Furthermore, the outer body is preferably made of a material selected from the group consisting of glass, plastic, ceramic, stainless steel, titanium, and mixtures thereof.

In other words, the outer body may be configured such that the capsule body may be inserted into the outer body. In this case, the capsule body may for example be made out of an organic or inorganic fibrous material. In this way, a more ecological form of the capsule body can be used as there may be no need for aluminum or plastic for the capsule body. In other words, the capsule body may be configured for single use whereas the outer body of the capsule may be configured for multiple use. Thus, the capsule body may be an inner body for single use which is supplemented with an outer body for multiple uses.

According to a further exemplary embodiment of the invention, the salt composition is in a solid form. For example, the salt composition can be in form of a powder, a granulate, flakes, or a tablet. The skilled person will select the solid form according to the size of the inventive capsule and the desired dissolution profile of the salt composition.

According to a further exemplary embodiment of the invention, the first cavity comprises an impermeable, perforable bag and the salt composition is provided in a liquid form and is enclosed by the impermeable, punctuable bag.

In this way, when the capsule is inserted in the beverage dispensing device, the impermeable, punctuable bag may be punctuated by the beverage dispensing device such that the liquid salt composition is released into the water flowing through the capsule body. Furthermore, the liquid salt composition may be mixed with the water flowing through the capsule body in the turbulence layer.

According to one embodiment the liquid salt composition comprises a salt composition and water. The liquid salt composition may have a solids content from 1 to 95 wt.-% salt composition, based on the total weight of the liquid salt composition, preferably from 10 to 90 wt.-%, more preferably from 20 to 85 wt.-%, and most preferably from 30 to 80 wt.-%.

According to a further exemplary embodiment of the invention, the salt composition comprises mineral salts. "Mineral salts" in the meaning of the present invention are inorganic salts that can be ingested or absorbed by living organisms for healthy grow and maintenance. The mineral salts may be preferably selected from the group consisting of alkali or alkaline earth salts, limestone, lime, dolomite, clay minerals, natural zeolites, and mixtures thereof. In particular, all mineral salts can be used, which may be found in drinking water, spring water, ground water, or mineral water. Apart from mineral salts, the salt composition may also comprise salts from the group of alkali or alkaline earth salts. Examples for alkali or alkaline earth salts are sodium, potassium, magnesium and calcium salts, preferably the alkali or alkaline earth salts are selected from the group consisting of potassium chloride, potassium bicarbonate, potassium sulfate, potassium citrate, sodium chloride, sodium bicarbonate, sodium sulfate, sodium citrate, magnesium chloride, magnesium sulfate, magnesium carbonate, magnesium citrate, magnesium lactate, magnesium gluconate, magnesium lactatgluconate, calcium chloride, calcium sulfate, calcium carbonate, calcium citrate, calcium lactate, calcium gluconate, calcium lactatgluconate, and mixtures thereof.

Besides the aforementioned compounds, the salt composition can also comprise natural minerals such as substances that were formed by a geological process. For example, these natural minerals may comprise limestone, dolomite, gypsum rocks, clay minerals, or natural zeolites or mixtures thereof. However, these minerals may have very low solubility in water. This can be addressed with the ion exchanging element, acid composition as well as by the capsule with different chambers described in the context of the application.

The skilled person will appreciate that the mineral salts can be selected such that the salt composition resembles the mineral composition of specific local spring or ground water or commercially available mineral waters. For example, by choosing the salt composition accordingly, water can be produced which corresponds to popular commercially available mineral waters such as Evian, Vittel, Rossbacher, or Gerolsteiner, and thus, the transport of water bottles over long distances would not be necessary anymore. Furthermore, the present invention provides the possibility of providing capsules with a great variety of salt compositions, depending on the desired taste and purpose. For example, it would also be possible to provide salt compositions which are specifically formulated for athletes, or elderly people, who have specific mineral requirements. It would also be possible to provide salt compositions which are specifically formulated for coffee or tea. For example, it is known that a potassium concentration of at least 30 mg/l and less than 300 mg/l may improve the taste of coffee or tea. Thus, by providing a specific salt composition the taste of coffee, tea or other beverages can be adapted to local preferences or the desired taste of a beverage company.

According to a further exemplary embodiment of the invention, the salt composition further comprises trace elements, vitamins, amino acids, plant extracts, herbal extracts, folic acids, flavoring, and mixtures thereof. Examples of trace elements are lithium, selenium, zinc, iron, phosphate, iodide, or molybdenum. Examples of vitamins are vitamin A, beta carotene, vitamin B1, vitamin B2, vitamin B3, vitamin B5, vitamin B6, vitamin B12, biotin, vitamin C, vitamin D, vitamin E, or vitamin K.

According to a further exemplary embodiment of the invention, the capsule body may have a volume between 5 ml and 50 ml, preferably between 8 ml and 40 ml, and most preferably between 10 ml and 25 ml.

A second aspect of the invention relates to a beverage dispenser which comprises a first capsule described in the context of the application. Furthermore, the beverage dispenser comprises a first receiving device configured for receiving the first capsule. Moreover, the first receiving device is arranged such that a beverage flows through the capsule before the beverage is dispensed, when the capsule is received by the receiving device.

According to a further exemplary embodiment of the invention, the beverage dispenser may further comprise a second receiving device for receiving a second capsule, wherein the second capsule comprises a beverage base.

In this way, the beverage dispenser may be configured for receiving two different capsule at the same time, a first capsule comprising a salt composition as described in the context of the application and a second capsule comprising a beverage base as described in the context of the application.

According to a further exemplary embodiment of the invention, the beverage dispenser comprises a reverse osmosis unit for generating desalinated water and for removing contaminants from water. The reverse osmosis unit is arranged such that the desalinated water (permeate) of the reverse osmosis unit flows through the capsule. In other words, the reverse osmosis may be configured such that the water flows through the first receiving device of the beverage dispenser.

These and other aspects of the invention will be apparent from and elucidated with reference to the embodiments described hereinafter.

### Brief description of the figures

Fig. 1A and 1B each show a beverage dispensing device according to an exemplary embodiment of the invention.
Fig. 2 shows a capsule according to an exemplary embodiment of the invention.
Fig. 3 shows a capsule according to a further exemplary embodiment of the invention.
Fig. 4 shows a capsule according to a further exemplary embodiment of the invention.
Figs. 5A and 5B each show a capsule according to a further exemplary embodiment of the invention.
Fig. 6 shows a capsule according to a further exemplary embodiment of the invention.
Fig. 7 shows a capsule according to a further exemplary embodiment of the invention.

It shall be noted that the figures are not necessarily drawn to scale. Furthermore, if the same reference signs are used in different figures, they may refer to the same or to similar elements. The same or similar elements may however also be designated with different reference signs.

### Detailed description of the figures

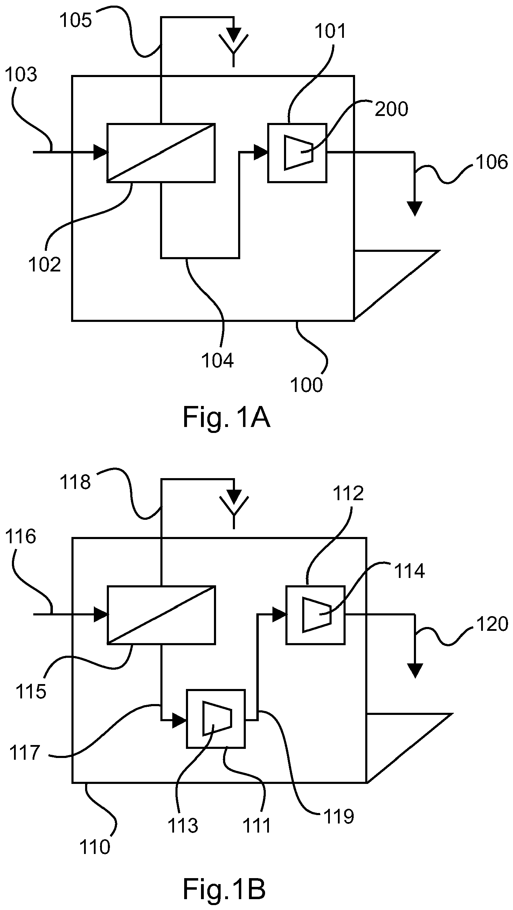

Fig. 1A shows a beverage dispenser 100 according to an exemplary embodiment of the invention. The beverage dispenser 100 comprises a first receiving device 101 and a first capsule 200, which is described in the context of the application. The first receiving device 101 is configured for receiving the first capsule 200. Furthermore, the first receiving device 101 is arranged such that a beverage 104 flows through the first capsule 200 before the beverage 106 is dispensed, when the first capsule 200 is received by the first receiving device 101.

The first beverage may for example be desalinated and/or decontaminated water as it is exemplarily shown in Fig. 1A.

Thus, the beverage dispenser 100 optionally comprises a reverse osmosis unit 102 which is provided with water 103, for example through a water pipe or from a water tank. The water 103 provided to the reverse osmosis unit 102 is not necessarily drinking water. The permeate 104 of the reverse osmosis unit 102 is then the beverage that flows through the first capsule 200. Furthermore, the reverse osmosis unit 102 further releases drain water 105, for example into a drainage system.

Furthermore, there is also the possibility that the beverage dispenser comprises a second receiving device for receiving a second capsule that contains a beverage base such as espresso, coffee, tea, lemonade, etc. This is shown in Fig. 1B according to a further exemplary embodiment of the invention. In this figure, another beverage dispenser 110 is shown, which comprises a first receiving device 111 for receiving the first capsule 113 and a second receiving device 112 for receiving a second capsule 114. The first capsule 113 relates to a capsule comprising a salt composition that is described in the context of the present application and the second capsule 114 is a capsule that contains a beverage base such as espresso, coffee, tea, lemonade, etc. Furthermore, the beverage dispenser 110 optionally comprises a reverse osmosis unit 115 which is provided with water 116. The reverse osmosis unit 115 then outputs permeate 117 and drain water 118 wherein the permeate 117 first flows through the first capsule 113 such that remineralized water 119 is created. This remineralized water then flows through the second capsule 114 such that the final beverage 120 is created. It may however be understood that the permeate of the reverse osmosis unit 115 may already be the beverage that flows through the first capsule 113 according to the nomenclature used in the present application. Furthermore, the beverage dispenser 110 may further comprise a heating unit (not shown) which may for example be arranged before the first receiving device 111 or between the first receiving device 111 and the second receiving device 112. In this way, hot beverages such as espresso, coffee, tea, instant soup, etc. can be produced.

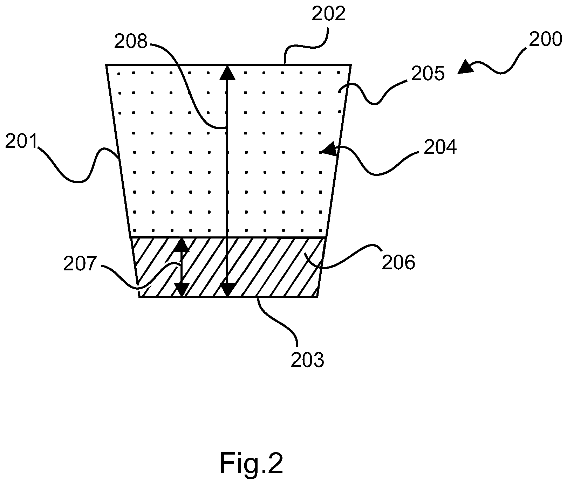

Fig. 2 shows a capsule for remineralizing water according to a further exemplary embodiment of the invention. The capsule 200 comprises a capsule body 201 defining an inlet side 202 and an outlet side 203. Furthermore, the capsule comprises a first cavity 204 which is located within the capsule body 201 and comprises a salt composition 205. The capsule further comprises a turbulence layer 206 which is configured for creating turbulences in water flowing through the capsule body 201 from the inlet side 202 to the outlet side 203. The turbulence layer 206 is arranged between the first cavity 204 and the outlet side 203 and has a thickness 207 that is greater than 15% of a distance 208 between the inlet side 202 and the outlet side 203.

In other words, the capsule 200 has a layered structure within the capsule body 201 wherein the upper layer is composed by the first cavity 204 with the salt composition 205 and the lower layer is composed by the turbulence layer 206. These layers may be vertically arranged with regard to the overall water flow from the inlet side 202 to the outlet side 203. In the exemplary embodiment of Fig. 2 it is shown that the capsule body 201 has the shape of a truncated cone, wherein the inlet side 202 is defined by the bottom surface of the truncated cone and the outlet side 203 is defined by the top surface of the truncated cone. Although, this exemplary embodiment shows a capsule body in the shape of a truncated cone, also other shapes are possible, for example any rotational symmetric body such as a cylinder, a truncated cone, a truncated pyramid, etc. Thus, the bottom and top surfaces of the capsule body may also have a non-circular shape such as an oval shape, a quadratic or polygonal shape. The capsule body 201 may be made of a material that is selected from the group consisting of plastic, bioplastic, oriented or non-oriented synthetic fibers, natural material, cellulose, aluminum, and mixtures thereof.

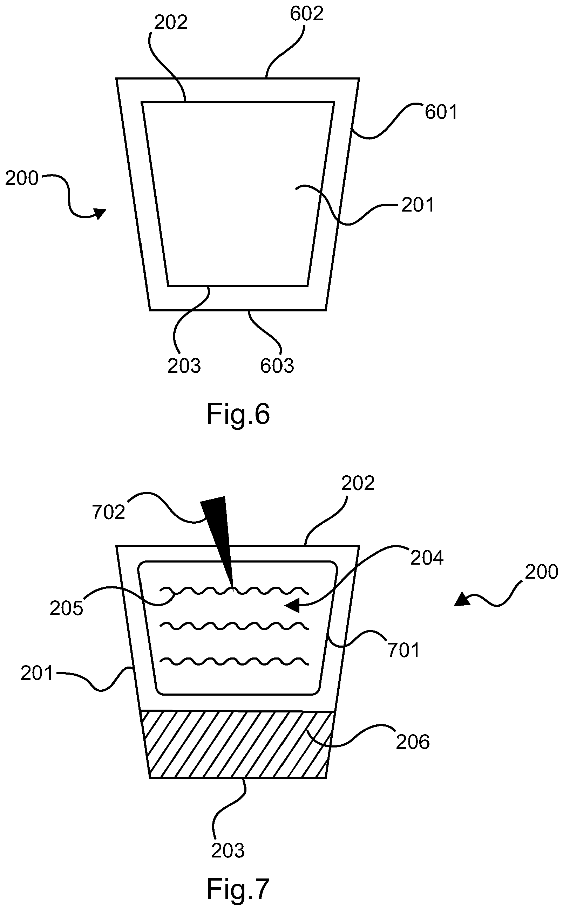

The turbulence layer 206 comprises or may be made out of a fibrous material, which is a nonwoven material. A fibrous material of the turbulence layer may have a mean pore size from 100 µm to 400 µm and/or a specific weight from 40 g/m² to 400 g/m². Furthermore, the turbulence layer 206 may have a thickness 207 that is between 20% and 90% or between 30% and 80% or between 40% and 60% of the distance 208 between the inlet side 202 and the outlet side 203. In other words, the relation between the thickness 207 of the turbulence layer 206 and the overall height 208 of the capsule body 201 are specified. The first cavity 204 may have a volume between 0.5 ml and 40 ml. In the exemplary embodiment shown in Fig. 2, the salt composition 205 is provided in a solid form. However, there are also exemplary embodiments (for example the exemplary embodiment shown in Fig. 7) where the salt composition is provided in a liquid form.

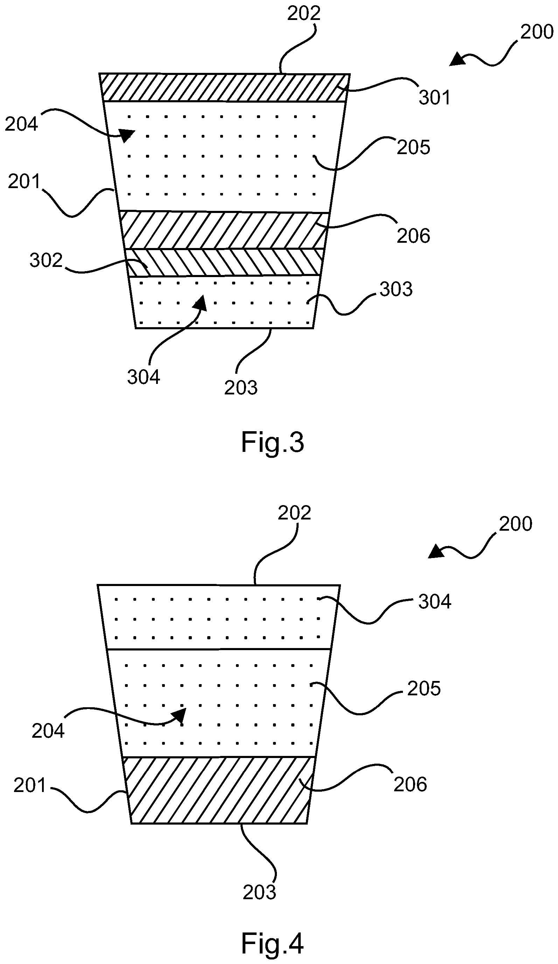

Fig. 3 shows a capsule 200 according to another exemplary embodiment of the invention. In addition to the capsule of Fig. 2, the capsule of Fig. 3 comprises a filter layer 301 which is arranged between first cavity 204 and the inlet side 202, a bacteria filter (i.e. membrane filter) 302 and a second cavity 304 comprising a beverage base 303. The second cavity 304 is arranged between the turbulence layer 206 and the outlet side 203, in the present exemplary embodiment between the bacteria filter 302 and the outlet side 203. Although it is shown in this exemplary embodiment that the capsule 200 additionally comprises a filter element 301, a bacteria filter 302, and a second cavity 304 with a beverage base 303, the capsule 200 may also comprise only one of these additional elements/layers or any combination of two of these elements/layers. The bacteria filter 302 may also be arranged at another position, e.g. between the inlet side 202. For example, the bacteria filter 302 may be integrated in or be part of the filter layer 301.

The filter layer may comprise a fibrous material which may have a pore size between 1 µm and 200 µm or between 10 µm and 150 µm or between 50 µm and 100 µm. Furthermore, the fibrous material of the filter layer 301 may have a specific weight between 10 g/m² and 100 g/m² or between 20 g/m² and 80 g/m² or between 30 g/m² and 50 g/m². The filter layer 301 may be configured for distributing the incoming water over the whole surface of the inlet side such that the salt composition 205 in the first cavity 204 is evenly dissolved in the water flowing through the capsule body 201. Furthermore, the filter layer 301 may prevent that solid particles such as salts fall out of the capsule body 201. The bacteria filter 302 may, for example, be a membrane with a pore size below 0.2 µm, preferably an ultrafiltration membrane. The beverage base may for example be selected from the group consisting of espresso, coffee, tea, a soluble beverage powder, a liquid beverage concentrate, and mixtures thereof. For example, the beverage base may be a base of a lemonade, etc.

Fig. 4 shows a capsule according to a further exemplary embodiment of the invention. In addition to the layers/elements of the capsule shown in Fig. 2, the capsule of the exemplary embodiment shown in Fig. 4 further comprises an ion exchange element and/or an acid composition 304 that is arranged between the inlet side 202 and the first cavity 204. In other words, the ion exchange element and/or the acid composition 304 may be arranged in a further cavity (for example a third cavity) that is arranged between the first cavity and the inlet side 202. However, there is also the possibility that the ion exchange element and/or the acid composition 304 is comprised by the first cavity 204 and is for example mixed with the salt composition. In that case, the capsule 200 would have the structure of the one shown in Fig. 2. Furthermore, the capsule shown in Fig. 4 may further comprise an additional or a combination of the additional elements, i.e. the filter layer 301, the bacteria filter 302, and/or the beverage base 303 described in the context of the exemplary embodiment of Fig. 3.

The ion exchanger and/or the acid composition 304 may cause that water flowing into the capsule body 201 through the inlet side 202 has a lower pH value such that the dissolution of the salt compound 205 into the water is improved as described in the context of the present application.

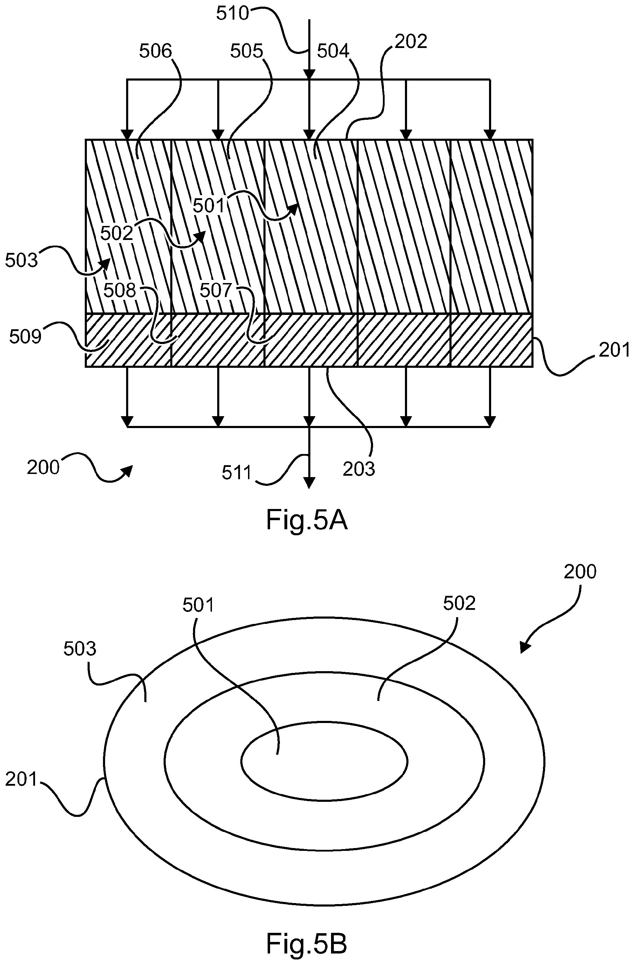

Figs. 5A and 5B show a capsule according to a further exemplary embodiment of the invention, wherein Fig. 5A shows a side view and Fig. 5B shows a top view. The capsule body 201 is divided into a plurality of chambers 501, 502 and 503, wherein each chamber 501, 502, 503 of the plurality of chambers is connected to the inlet side 202 and the outlet side 203. Furthermore, each chamber 501, 502, and 503 of the plurality of chambers comprises a first cavity 504, 505, 506 and a turbulence layer 507, 508, and 509 that is arranged between the first cavity 504, 505, and 506 and the outlet side 203, respectively. Furthermore, each first cavity 504, 505, and 506 of each chamber 501, 502 and 503 is filled with a different salt composition of different solubility. Furthermore, each chamber has a different volume and/or is configured for allowing a different flow rate of water through the respective chamber.

In the exemplary embodiment shown in Figs. 5A and 5B, the capsule body has a cylindrical shape with an oval ground base. The three different chambers 501, 502 and 503 of the capsule are concentrically arranged within the capsule. Furthermore, the capsule body may comprise inner walls for separating the different chambers 501, 502 and 503 from each other, which in the present case are concentrically arranged within the capsule body 201. In this way, the different chambers 501, 502 and 503 have different volumes. Furthermore, the inlet side of the different chambers may also comprise a different perforation such that a different flow rate of water through the respective chamber 501, 502 and 503 is achieved. For example, the upper part of each first cavity may be sealed with a perforated foil such that the perforation of the top foil of each chamber 501, 502 and 503 differs from each other. As shown in Fig. 5A, the inflowing water 510 is distributed over the different chambers 501, 502, 503 such that water flows through each chamber. The water from each chamber then constitutes a part of the outflowing water 511.

Fig. 6 shows a capsule 200 according to a further exemplary embodiment, which further comprises an outer body 601 that is configured to receive or enclose the capsule body 201. For example, the outer body 601 comprises a removable top surface or lid 602 which represents the inlet side of the outer body. In this way, the removable lid 602 can be removed in order to insert the capsule body 201 into the outer body 601. Subsequently, the removable lid can be placed on top of the outer body in order to close the outer body 601. The capsule body 201 can be structured as described in the context of the present application. The outer body may for example be made of a material selected from the group consisting of glass, plastic, ceramic, stainless steel, titanium, and mixtures thereof. When the capsule body is inserted in the outer body 601, the outlet side 203 of the capsule body 201 is adjacent to the outlet side 603 of the outer body 601. Furthermore, the inlet side of the capsule body 201 is adjacent to the inlet side of the outer body 602. The inlet side 602 and the outlet side 603 of the outer body 601 may each have an opening or openings such as perforations for letting in water into the outer body such that it can flow through the capsule body 201 and exit the outer body through the outlet side 603.

In Fig. 7, a further exemplary embodiment is shown which relates to a capsule wherein the first cavity 204 is located within a punctuable bag 701. The salt composition 205 is provided as a liquid salt composition that is enclosed by the impermeable punctuable bag 701. When the capsule 200 is inserted in a beverage dispenser, a needle of the beverage dispenser 702 may punctuate a foil of the inlet side 202 as well as the punctuable bag 205 such that the liquid salt composition is mixed with the water flowing through the capsule body 201. The turbulence layer 206 having a thickness that is greater than 15% of the height of the capsule body 201 may improve the mixing of the salt composition 205 with the water flowing through the capsule body 201.

While the invention has been illustrated and described in detail in the drawings and the foregoing description, such drawings and description are to be considered illustrative or exemplary and not restrictive. Thus, the invention is not limited to the disclosed embodiments. Other variations to the disclosed embodiments can be understood and effected by those skilled in the art in practicing the claimed invention from a study of the drawings, the disclosure, and the appended claims.

In the claims, the word "comprising" does not exclude other elements or steps, and the indefinite article "a" or "an" does not exclude a plurality. The mere fact that the certain measures are recited in mutually different dependent claims does not indicate that a combination of these measures cannot be used to advantage. Any reference signs in the claims should not be construed as limiting the scope.

## Claims

1. A capsule (200) for remineralizing water, the capsule comprising:
a capsule body (201) defining an inlet side (202) and an outlet side (203);
a first cavity (204) located within the capsule body;
a turbulence layer (206);
wherein the first cavity comprises a salt composition (205);
**characterized in that** the turbulence layer is configured for creating turbulences in water flowing through the capsule body from the inlet side to the outlet side;
wherein the turbulence layer is arranged between the first cavity and the outlet side and has a thickness (207) that is greater than 15% of a distance (208) between the inlet side and the outlet side; and
wherein the turbulence layer comprises a fibrous material, which is a nonwoven material.

2. The capsule according to claim 1,
wherein the fibrous material has a mean pore size from 100 µm to 400 µm, preferably from 150 µm to 350 µm, more preferably from 170 µm to 320 µm, and most preferably from 200 µm to 300 µm; and/or
wherein the fibrous material has a specific weight from 40 to 400 g/m².

3. The capsule according to any of the preceding claims,
wherein the turbulence layer has a thickness that is between 20 and 90% of the distance between the inlet and the outlet side, preferably between 30 and 80%, and most preferably between 40 and 60%.

4. The capsule according to any of the preceding claims,
wherein the first cavity has a volume between 0.5 ml and 40 ml.

5. The capsule according to any of the preceding claims, the capsule further comprising:
a filter layer (301);
wherein the filter layer is arranged between the first cavity and the inlet side.

6. The capsule according to claim 5,
wherein the filter layer comprises a fibrous material with oriented or non-oriented fibers;
wherein the fibrous material of the filter layer has a pore size from 1 µm to 200 µm, preferably from 10 µm to 150 µm, and most preferably from 50 µm and 100 µm, and/or
wherein the fibrous material of the filter layer has a specific weight between 10 g/m² and 100 g/m², preferably between 20 and 80 g/m², and most preferably between 30 and 50 g/m².

7. The capsule according to any of the preceding claims,
wherein the capsule further comprises an ion exchange element within the first cavity and/or between the first cavity and the inlet side, preferably the ion exchange element comprises a weak acid and/or strong acid cation exchange material; and/or
wherein the capsule further comprises an acid composition comprising at least one acid and/or at least one acid salt within the first cavity and/or between the first cavity and the inlet side.

8. The capsule according to any of the preceding claims,
wherein the capsule further comprises a membrane filter (302), preferably an ultrafiltration membrane filter, between the turbulence layer and the outlet side; and
wherein, preferably, the membrane filter has a pore size below 0.2 µm.

9. The capsule according to any one of the preceding claims,
wherein the capsule further comprises a second cavity between the turbulence layer and the outlet side;
wherein the second cavity comprises a beverage base (206); and
wherein the beverage base is preferably selected from the group consisting of espresso, coffee, tea, a soluble beverage powder, a liquid beverage concentrate, and mixtures thereof.

10. The capsule according to any of the preceding claims,
wherein the capsule body is divided in a plurality of chambers (501, 502, 503);
wherein each chamber of the plurality of chambers is connected to the inlet side and the outlet side;
wherein each chamber of the plurality of chambers comprises a first cavity (504, 505, 506) and a turbulence layer (507, 508, 509) arranged between the first cavity and the outlet side;
wherein each turbulence layer has a thickness greater than 15% of the distance between the inlet side and the outlet side;
wherein each first cavity of each chamber is filled with a different salt composition of different solubility; and
wherein each chamber is configured for allowing a different flow rate of water though the respective chamber.

11. The capsule according to any of the preceding claims,
wherein the capsule body is made of a material selected from the group consisting of plastic, bioplastic, oriented or non-oriented synthetic fibers, natural material, preferably cellulose, aluminum, and mixtures thereof.

12. The capsule according to any of the preceding claims, further comprising:
an outer body (601), configured for enclosing the capsule body;
wherein the outer body is preferably made of a material selected from the group consisting of glass, plastic, ceramic, stainless steel, titanium, and mixtures thereof.

13. The capsule according to any of the preceding claims,
wherein the salt composition is in a solid form; or
wherein the first cavity comprises an impermeable, punctuable bag (701); and
wherein the salt composition is in a liquid form and is enclosed by the impermeable, punctuable bag.

14. The capsule according to any of the preceding claims,
wherein the salt composition comprises mineral salts, preferably selected from the group consisting of alkali or alkaline earth salts, limestone, lime, dolomite, clay minerals, natural zeolites, and mixtures thereof.

15. The capsule according to any of the preceding claims,
wherein the salt composition further comprises trace elements, vitamins, amino acids, plant extracts, herbal extracts, folic acid, and/or a flavoring.

16. The capsule according to any of the preceding claims,
wherein the capsule body has a volume between 5 ml and 50 ml, preferably between 8 ml and 40 ml, and most preferably between 10 ml and 25 ml.

17. A beverage dispenser (100, 110), comprising:
a first capsule (200, 113) according to any of the preceding claims;
a first receiving device (101, 111) for receiving the first capsule;
wherein the receiving device is arranged such that a beverage flows through the capsule before the beverage is dispensed, when the capsule is received by the receiving device.

18. The beverage dispenser according to claim 17, further comprising:
a second receiving device (112) for receiving a second capsule (114), the second capsule comprising a beverage base.

19. The beverage dispenser according to claim 17 or 18, further comprising:
a reverse osmosis unit (102, 115) for generating desalinated water and removing contaminants from water;
wherein the reverse osmosis unit is arranged such that the desalinated water of the reverse osmosis unit flows through the capsule.

## Patentansprüche

1. Eine Kapsel (200) zur Remineralisierung von Wasser, wobei die Kapsel umfasst:
ein Kapselgehäuse (201), wobei das Kapselgehäuse eine Einlassseite (202) und eine Auslassseite (203) definiert;
ein erster Hohlraum (204), der sich innerhalb des Kapselgehäuses befindet;
eine Verwirbelungsschicht (206);
wobei der erste Hohlraum eine Salzzusammensetzung (205) enthält;
**dadurch gekennzeichnet, dass** die Verwirbelungsschicht zur Erzeugung von Verwirbelungen in Wasser konfiguriert ist, das durch die Kapsel von der Einlassseite zu der Auslassseite fließt;
wobei die Verwirbelungsschicht zwischen dem ersten Hohlraum und der Auslassseite angeordnet ist und eine Dicke (207) aufweist, die größer ist als 15% eines Abstandes (208) zwischen der Einlassseite und der Auslassseite; und
wobei die Verwirbelungsschicht ein faserförmiges Material umfasst, welches ein Vliesmaterial ist.

2. Die Kapsel gemäß Anspruch 1,
wobei das faserförmige Material eine mittlere Porengröße von 100 µm bis 400 µm aufweist, bevorzugt von 150 µm bis 350 µm, mehr bevorzugt von 170 µm bis 320 µm, und am meisten bevorzugt von 200 µm bis 300 µm; und/oder
wobei das faserförmige Material ein spezifisches Gewicht von 40 bis 400 g/m² aufweist.

3. Die Kapsel gemäß einem der vorherigen Ansprüche,
wobei die Verwirbelungsschicht eine Dicke zwischen 20 und 90% des Abstands zwischen der Einlass- und der Auslassseite aufweist, bevorzugt zwischen 30 und 80%, und am meisten bevorzugt zwischen 40 und 60%.

4. Die Kapsel gemäß einem der vorherigen Ansprüche,
wobei der erste Hohlraum ein Volumen zwischen 0.5 ml und 40 ml aufweist.

5. Die Kapsel gemäß einem der vorherigen Ansprüche, wobei die Kapsel zusätzlich umfasst:
eine Filterschicht (301);
wobei die Filterschicht zwischen dem ersten Hohlraum und der Einlassseite angeordnet ist.

6. Die Kapsel gemäß Anspruch 5,
wobei die Filterschicht ein faserförmiges Material mit ausgerichteten oder nicht-ausgerichteten Fasern umfasst;
wobei das faserförmige Material der Filterschicht eine Porengröße von 1 µm bis 200 µm aufweist, bevorzugt von 10 µm bis 150 µm, und am meisten bevorzugt von 50 µm bis 100 µm, und/oder
wobei das faserförmige Material der Filterschicht ein spezifisches Gewicht zwischen 10 g/m² und 100 g/m² aufweist, bevorzugt zwischen 20 und 80 g/m², und am meisten bevorzugt zwischen 30 und 50 g/m².

7. Die Kapsel gemäß einem der vorherigen Ansprüche,
wobei die Kapsel zusätzlich ein Ionentauscherelement innerhalb des ersten Hohlraums und/oder zwischen dem ersten Hohlraum und der Einlassseite umfasst,
bevorzugt umfasst das Ionentauscherelement ein schwach saures und/oder ein stark saures Kationentauschermaterial; und/oder
wobei die Kapsel zusätzlich eine Säurezusammensetzung umfassend mindestens eine Säure und/oder mindestens ein Säuresalz innerhalb des ersten Hohlraums und/oder zwischen dem ersten Hohlraum und der Einlassseite umfasst.

8. Die Kapsel gemäß einem der vorherigen Ansprüche,
wobei die Kapsel zusätzlich einen Membranfilter (302), bevorzugt einen Ultrafiltrationsmembranfilter, zwischen der Verwirbelungsschicht und der Auslassseite umfasst; und
wobei bevorzugt der Membranfilter eine Porengröße unterhalb 0.2 µm aufweist.

9. Die Kapsel gemäß einem der vorherigen Ansprüche,
wobei die Kapsel zusätzlich einen zweiten Hohlraum zwischen der Verwirbelungsschicht und der Auslassseite aufweist;
wobei der zweite Hohlraum einen Getränkegrundstoff (206) umfasst; und
wobei der Getränkegrundstoff bevorzugt ausgewählt ist aus der Gruppe bestehend aus Espresso, Kaffee, Tee, einem löslichen Getränkepulver, einem flüssigen Getränkekonzentrat, und Mischungen davon.

10. Die Kapsel gemäß einem der vorherigen Ansprüche,
wobei das Kapselgehäuse in eine Vielzahl von Kammern (501, 502, 503) unterteilt ist;
wobei jede Kammer der Vielzahl von Kammern mit der Einlassseite und der Auslassseite verbunden ist;
wobei jede Kammer der Vielzahl von Kammern einen ersten Hohlraum (504, 505, 506) umfasst und eine Verwirbelungsschicht (507, 508, 509), die zwischen dem ersten Hohlraum und der Auslassseite angeordnet ist;
wobei jede Verwirbelungsschicht eine Dicke größer als 15% des Abstands zwischen der Einlassseite und der Auslassseite aufweist;
wobei jeder erste Hohlraum jeder Kammer mit einer unterschiedlichen Salzzusammensetzung mit unterschiedlicher Löslichkeit gefüllt ist; und
wobei jede Kammer so konfiguriert ist, dass eine unterschiedliche Durchflussgeschwindigkeit des Wassers durch die entsprechende Kammer ermöglicht wird.

11. Die Kapsel gemäß einem der vorherigen Ansprüche,
wobei das Kapselgehäuse aus einem Material, ausgewählt aus der Gruppe bestehend aus Kunststoff, Biokunststoff, ausgerichteten und nicht-ausgerichteten synthetischen Fasern, natürlichem Material, bevorzugt Cellulose, Aluminium, und Mischungen davon, hergestellt ist.

12. Die Kapsel gemäß einem der vorherigen Ansprüche, zusätzlich umfassend:
ein Außengehäuse (601), das zum Einschluss des Kapselgehäuses konfiguriert ist;
wobei das Außengehäuse bevorzugt aus einem Material, ausgewählt aus der Gruppe bestehend aus Glas, Kunststoff, Keramik, rostfreier Stahl, Titan, und Mischungen davon, hergestellt ist.

13. Die Kapsel gemäß einem der vorherigen Ansprüche,
wobei die Salzzusammensetzung in einer festen Form vorliegt; oder
wobei der erste Hohlraum einen undurchlässigen, durchstechbaren Beutel (701) umfasst; und
wobei die Salzzusammensetzung in einer flüssigen Form vorliegt und von dem undurchlässigen, durchstechbaren Beutel eingeschlossen ist.

14. Die Kapsel gemäß einem der vorherigen Ansprüche,
wobei die Salzzusammensetzung Mineralsalze umfasst, bevorzugt ausgewählt aus der Gruppe bestehend aus Alkali- oder Erdalkalisalzen, Kalkstein, Kalk, Dolomit, Tonmineralien, natürlichen Zeolithen und Mischungen davon.

15. Die Kapsel gemäß einem der vorherigen Ansprüche,
wobei die Salzzusammensetzung zusätzlich Spurenelemente, Vitamine, Aminosäuren, Pflanzenextrakte, Kräuterextrakte, Folsäure und/oder Aromastoffe umfasst.

16. Die Kapsel gemäß einem der vorherigen Ansprüche,
wobei das Kapselgehäuse ein Volumen zwischen 5 ml und 50 ml aufweist, bevorzugt zwischen 8 ml und 40 ml, und am meisten bevorzugt zwischen 10 ml und 25 ml.

17. Ein Getränkespender (100, 110), umfassend:
eine erste Kapsel (200, 113) gemäß einem der vorherigen Ansprüche;
eine erste Aufnahmevorrichtung (101, 111) zur Aufnahme der ersten Kapsel;
wobei die Aufnahmevorrichtung so angeordnet ist, dass ein Getränk durch die Kapsel fließt bevor das Getränk gespendet wird, wenn die Kapsel von der Aufnahmevorrichtung aufgenommen ist.

18. Der Getränkespender gemäß Anspruch 17, zusätzlich umfassend:
eine zweite Aufnahmevorrichtung (112) zur Aufnahme einer zweiten Kapsel (114), wobei die zweite Kapsel einen Getränkegrundstoff umfasst.

19. Der Getränkespender gemäß Anspruch 17 oder 18, zusätzlich umfassend:
eine Umkehrosmose-Einheit (102, 115) zur Erzeugung von entsalztem Wasser und zur Entfernung von Verunreinigungen aus dem Wasser;
wobei die Umkehrosmose-Einheit so angeordnet ist, dass das entsalzte Wasser der Umkehrosmose-Einheit durch die Kapsel fließt.

## Revendications

1. Capsule (200) destinée à la reminéralisation de l'eau, la capsule comprenant :
un corps de capsule (201) définissant un côté d'entrée (202) et un côté de sortie (203) ;
une première cavité (204) située au sein du corps de capsule ;
une couche de turbulences (206) ;
dans laquelle la première cavité comprend une composition de sel (205) ;
**caractérisée en ce que** la couche de turbulences est conçue pour créer des turbulences en matière d'écoulement d'eau à travers le corps de capsule à partir du côté d'entrée vers le côté de sortie ;
dans laquelle la couche de turbulences est agencée entre la première cavité et le côté de sortie et possède une épaisseur (207) qui est supérieure à 15 % d'une distance (208) entre le côté d'entrée et le côté de sortie ; et
dans laquelle la couche de turbulences comprend un matériau fibreux, qui est un matériau non tissé.

2. Capsule selon la revendication 1,
dans laquelle le matériau fibreux possède une taille de pore moyenne comprise entre 100 µm et 400 µm, de préférence comprise entre 150 µm et 350 µm, plus préférablement comprise entre 170 µm et 320 µm, et encore plus préférablement comprise entre dans 200 µm et 300 µm ; et/ou dans lequel le matériau fibreux possède un poids spécifique compris entre 40 et 400 g/m².

3. Capsule selon l'une quelconque des revendications précédentes,
dans laquelle la couche de turbulences possède une épaisseur qui est comprise entre 20 et 90 % de la distance entre le côté d'entrée et le côté de sortie, de préférence comprise entre 30 et 80 %, et plus préférablement comprise entre 40 et 60 %.

4. Capsule selon l'une quelconque des revendications précédentes,
dans laquelle la première cavité possède un volume compris entre 0,5 ml et 40 ml.

5. Capsule selon l'une quelconque des revendications précédentes, la capsule comprenant en outre :
une couche de filtre (301) ;
dans laquelle la couche de filtre est agencée entre la première cavité et le côté d'entrée.

6. Capsule selon la revendication 5,
dans laquelle la couche de filtre comprend un matériau fibreux muni de fibres orientées ou non orientées ;
dans laquelle le matériau fibreux de la couche de filtre possède une taille de pore comprise entre 1 µm et 200 µm, de préférence comprise entre 10 µm et 150 µm, et plus préférablement comprise entre 50 µm et 100 µm, et/ou dans laquelle le matériau fibreux de la couche de filtre possède un poids spécifique compris entre 10 g/m² et 100 g/m², de préférence comprise entre 20 et 80 g/m², et plus préférablement compris entre 30 et 50 g/m².

7. Capsule selon l'une quelconque des revendications précédentes,
dans laquelle la capsule comprend en outre un élément échangeur d'ions au sein de la première cavité et/ou situé entre la première cavité et le côté d'entrée, de préférence l'élément échangeur d'ions comprend un matériau échangeur de cations faiblement acide et/ou fortement acide ; et/ou dans laquelle la capsule comprend en outre une composition d'acide comprenant au moins un acide et/ou au moins un sel d'acide au sein de la première cavité et/ou situé entre la première cavité et le côté d'entrée.

8. Capsule selon l'une quelconque des revendications précédentes,
dans laquelle la capsule comprend en outre un filtre membranaire (302), de préférence un filtre membranaire par ultrafiltration, situé entre la couche de turbulences et le côté de sortie ; et
dans laquelle, de préférence, le filtre membranaire possède une taille de pore inférieure à 0,2 µm.

9. Capsule selon l'une quelconque des revendications précédentes,
dans laquelle la capsule comprend en outre une deuxième cavité située entre la couche de turbulences et le côté de sortie ;
dans laquelle la deuxième cavité comprend une base de boissons (206) ; et dans laquelle la base de boissons est de préférence choisie parmi le groupe constitué de l'expresso, du café, du thé, d'une poudre de boisson soluble, d'un concentré de boisson liquide et de mélanges de ceux-ci.

10. Capsule selon l'une quelconque des revendications précédentes,
dans laquelle le corps de capsule est divisé en une pluralité de chambres (501, 502, 503) ;
dans laquelle chaque chambre de la pluralité de chambres est reliée au côté d'entrée et au côté de sortie ;
dans laquelle chaque chambre de la pluralité de chambres comprend une première cavité (504, 505, 506) et une couche de turbulences (507, 508, 509) agencée entre la première cavité et le côté de sortie ;
dans laquelle chaque couche de turbulences possède une épaisseur supérieure à 15 % de la distance entre le côté d'entrée et le côté de sortie ;
dans laquelle chaque première cavité de chaque chambre est remplie d'une composition de sel différente présentant différentes solubilités ; et
dans laquelle chaque chambre est conçue pour permettre un débit d'écoulement d'eau différent à travers la chambre respective.

11. Capsule selon l'une quelconque des revendications précédentes,
dans laquelle le corps de capsule est fabriqué à partir d'un matériau choisi parmi le groupe constitué du plastique, du bioplastique, des fibres synthétiques orientées ou non orientées, d'un matériau naturel, de préférence la cellulose, l'aluminium, et de mélanges de ceux-ci.

12. Capsule selon l'une quelconque des revendications précédentes, comprenant en outre :
un corps externe (601), conçu pour enfermer le corps de capsule ;
dans laquelle le corps externe est préférablement fabriqué à partir d'un matériau choisi parmi le groupe constitué du verre, du plastique, des céramiques, de l'acier inoxydable, du titane et de mélanges de ceux-ci.

13. Capsule selon l'une quelconque des revendications précédentes,
dans laquelle la composition de sel est sous une forme solide ; ou dans laquelle la première cavité comprend un sac imperméable, apte à être percé (701) ; et
dans laquelle la composition de sel est sous une forme liquide et est entourée du sac imperméable, apte à être percé.

14. Capsule selon l'une quelconque des revendications précédentes,
dans laquelle la composition de sel comprend des sels minéraux, préférablement choisis parmi le groupe constitué de sels alcalin ou de sels alcalino-terreux, du calcaire, de la chaux, de la dolomite, de minéraux d'argile, de zéolites naturelles et de mélanges de ceux-ci.

15. Capsule selon l'une quelconque des revendications précédentes,
dans laquelle la composition de sel comprend en outre des oligo-éléments, des vitamines, des acides aminés, des extraits de plantes, des extraits végétaux, de l'acide folique, et/ou un agent aromatisant.

16. Capsule selon l'une quelconque des revendications précédentes,
dans laquelle le corps de capsule possède un volume compris entre 5 ml et 50 ml, de préférence compris entre 8 ml et 40 ml, et plus préférablement compris entre 10 ml et 25 ml.

17. Distributeur de boissons (100, 110), comprenant :
une première capsule (200, 113) selon l'une quelconque des revendications précédentes ;
un premier dispositif de réception (101, 111) permettant de recevoir la première capsule ;
dans lequel le dispositif de réception est agencé de sorte qu'une boisson s'écoule à travers la capsule avant que la boisson ne soit distribuée, lorsque la capsule est reçue par le dispositif de réception.

18. Distributeur de boissons selon la revendication 17, comprenant en outre :
un deuxième dispositif de réception (112) permettant de recevoir une deuxième capsule (114), la deuxième capsule comprenant une base de boissons.

19. Distributeur de boissons selon la revendication 17 ou la revendication 18, comprenant en outre :
une unité d'osmose inverse (102, 115) permettant de générer de l'eau dessalée et d'éliminer des contaminants de l'eau ;
dans lequel l'unité d'osmose inverse est agencée de sorte que l'eau dessalée de l'unité d'osmose inverse s'écoule à travers la capsule.
